# EUROPÄISCHE PATENTSCHRIFT

(11) **EP 1 249 578 B1**
(45) Veröffentlichungstag und Bekanntmachung des Hinweises auf die Patenterteilung: **11.10.2006**
(21) Anmeldenummer: 01109036.2
(22) Anmeldetag: 11.04.2001
(51) Int. Cl.: F01D 25/12, F02C 7/18, F01D 5/18

(54) **Kühlung einer Gasturbine**
Cooling of a gas turbine
Refroidissement d'une turbine à gaz

(43) Veröffentlichungstag der Anmeldung: 16.10.2002
(73) Patentinhaber: SIEMENS AKTIENGESELLSCHAFT, 80333 München (DE)
(72) Erfinder: Tiemann, Peter, 58452 Witten (DE)

(56) Entgegenhaltungen:
- EP-A- 0 933 517
- EP-A- 1 052 373
- DE-A- 19 629 191
- DE-A- 19 824 766
- GB-A- 742 477
- US-A- 3 015 937
- US-A- 3 291 447
- US-A- 4 721 433
- US-A- 4 820 116
- PATENT ABSTRACTS OF JAPAN vol. 1999, no. 11, 30. September 1999 (1999-09-30) -& JP 11 159345 A (TOSHIBA CORP;TOSHIBA AITEC KK), 15. Juni 1999 (1999-06-15)

## Beschreibung

Die Erfindung bezieht sich auf eine Gasturbine mit einer Anzahl von jeweils zu Laufschaufelreihen zusammengefaßten, an einer Turbinenwelle angeordneten Laufschaufeln und mit einer Anzahl von jeweils zu Leitschaufelreihen zusammengefaßten, mit einem Turbinengehäuse verbundenen Leitschaufeln.

Gasturbinen werden in vielen Bereichen zum Antrieb von Generatoren oder von Arbeitsmaschinen eingesetzt. Dabei wird der Energieinhalt eines Brennstoffs zur Erzeugung einer Rotationsbewegung einer Turbinenwelle genutzt. Der Brennstoff wird dazu in einer Brennkammer verbrannt, wobei von einem Luftverdichter verdichtete Luft zugeführt wird. Das in der Brennkammer durch die Verbrennung des Brennstoffs erzeugte, unter hohem Druck und unter hoher Temperatur stehende Arbeitsmedium wird dabei über eine der Brennkammer nachgeschaltete Turbineneinheit geführt, wo es sich arbeitsleistend entspannt.

Zur Erzeugung der Rotationsbewegung der Turbinenwelle sind dabei an dieser eine Anzahl von üblicherweise in Schaufelgruppen oder Schaufelreihen zusammengefaßten Laufschaufeln angeordnet, die über einen Impulsübertrag aus dem Arbeitsmedium die Turbinenwelle antreiben. Zur Führung des Arbeitsmediums in der Turbineneinheit sind zudem üblicherweise zwischen benachbarten Laufschaufelreihen mit dem Turbinengehäuse verbundene Leitschaufelreihen angeordnet.

Bei der Auslegung derartiger Gasturbinen ist zusätzlich zur erreichbaren Leistung üblicherweise ein besonders hoher Wirkungsgrad ein Auslegungsziel. Eine Erhöhung des Wirkungsgrades läßt sich dabei aus thermodynamischen Gründen grundsätzlich durch eine Erhöhung der Austrittstemperatur erreichen, mit dem das Arbeitsmedium aus der Brennkammer ab- und in die Turbineneinheit einströmt. Daher werden Temperaturen von etwa 1200 °C bis 1300 °C für derartige Gasturbinen angestrebt und auch erreicht.

Bei derartig hohen Temperaturen des Arbeitsmediums sind jedoch die diesem ausgesetzten Komponenten und Bauteile hohen thermischen Belastungen ausgesetzt. Um dennoch bei hoher Zuverlässigkeit eine vergleichsweise lange Lebensdauer der betroffenen Komponenten zu gewährleisten, ist üblicherweise eine Kühlung der betroffenen Komponenten, insbesondere von Lauf- und/oder Leitschaufeln der Turbineneinheit, vorgesehen. Die Turbinenschaufeln sind daher üblicherweise kühlbar ausgebildet, wobei insbesondere eine wirksame und zuverlässige Kühlung der in Strömungsrichtung des Arbeitsmediums gesehen ersten Schaufelreihen sichergestellt sein soll. Zur Kühlung weist die jeweilige Turbinenschaufel dabei üblicherweise einen in das Schaufelblatt oder das Schaufelprofil integrierten Kühlmittelkanal auf, von dem aus ein Kühlmittel gezielt insbesondere den thermisch belasteten Zonen der Turbinenschaufel zuleitbar ist.

Als Kühlmittel kommt dabei üblicherweise Kühlluft zum Einsatz. Diese wird der jeweiligen Turbinenschaufel üblicherweise in der Art einer offenen Kühlung über einen integrierten Kühlmittelkanal zugeführt. Von diesem ausgehend durchströmt die Kühlluft in abzweigenden Kanälen die jeweils vorgesehenen Bereiche der Turbinenschaufel. Austrittsseitig sind diese Kanäle offen gelassen, so daß die Kühlluft nach dem Durchströmen der Turbinenschaufel aus dieser austritt und sich dabei mit dem in der Turbineneinheit geführten Arbeitsmedium vermischt.

Aus der US 4,820,116 ist eine Gasturbine bekannt, bei der sowohl die offen gekühlte Laufschaufel der ersten Turbinenstufe als auch die dieser Laufschaufel nachgeordnete Leitschaufel mit einem Kühlmittel versorgt wird, welches jeweils vom Rotor aus den Turbinenschaufeln getrennt zuführbar ist.

Auf diese Weise ist mit vergleichsweise einfachen Mitteln ein zuverlässiges Kühlsystem für die Turbinenschaufel bereitstellbar, wobei auch thermisch besonders belastete Zonen der Turbinenschaufel geeignet mit Kühlmittel beaufschlagbar sind. Andererseits ist jedoch bei der Einleitung der Kühlluft in das in der Turbineneinheit geführte Arbeitsmedium darauf zu achten, daß ihre charakteristischen Parameter wie Druck und Temperatur mit den entsprechenden Parametern des Arbeitsmediums vereinbar oder kompatibel sind. Insbesondere ist die zulässige Aufheizung der Kühlluft bei der Kühlung der Turbinenschaufeln nur begrenzt, so daß gerade bei vergleichsweise hohen angestrebten Austrittstemperaturen des Arbeitsmediums eine besonders große Menge an Kühlluft erforderlich ist. Dies wirkt sich wiederum begrenzend auf den Wirkungsgrad der Gasturbine aus.

Der Erfindung liegt daher die Aufgabe zugrunde, eine Gasturbine der oben genannten Art anzugeben, bei der bei zuverlässiger Kühlung der Turbinenschaufeln mit einfachen Mitteln ein besonders hoher Wirkungsgrad erreichbar ist.

Diese Aufgabe wird erfindungsgemäß mit einer gemäß Anspruch 1 ausgestalteten Gasturbine gelöst.

Die Erfindung geht dabei von der Überlegung aus, daß die Gasturbine für einen besonders hohen Wirkungsgrad derart ausgelegt sein sollte, daß eine zuverlässige Kühlung der Turbinenschaufeln mit einer nur geringen Menge an Kühlmedium erfolgen kann. Dazu sollte die Kühlung der Turbinenschaufeln in der Art einer geschlossenen Kühlung erfolgen, bei der das Kühlmedium nach einem Durchströmen der zu kühlenden Turbinenschaufel nicht dem in der Turbineneinheit strömenden Arbeitsmedium zugemischt, sondern vielmehr in kontrollierter Weise abgeführt und einer anderen Verwendung zugeführt wird. Bei einem derartigen Kühlkonzept ist nämlich keine Anpassung der Be triebsparameter des aus den Turbinenschaufeln abströmenden Kühlmediums an das Arbeitsmedium erforderlich.

Um den Herstellungs- und Entwicklungsaufwand für eine Gasturbine mit derartig geschlossen gekühlten Turbinenschaufeln besonders gering zu halten, sollte sich die Auslegung weitgehend an die Auslegung einer Gasturbine mit offener Kühlung der Turbinenschaufeln anlehnen. Die Strömungswege des Kühlmediums in der Gasturbine sollten dabei auch bei geschlossener Kühlung möglichst weitgehend an die Strömungswege des Kühlmediums bei offener Kühlung angenähert sein. Dies ist auf besonders einfache Weise erreichbar, indem die Bespeisung der Laufschaufeln mit Kühlluft über die Turbinenwelle und den Schaufelfuß beibehalten wird, wobei jedoch die Abführung des Kühlmediums aus der jeweiligen Laufschaufel in der Art einer geschlossenen Kühlung ebenfalls durch den Schaufelfuß und in die Turbinenwelle hinein erfolgt. Von dort ist die weitere Abführung des Kühlmediums über eine der jeweiligen Laufschaufeln in Strömungsrichtung des Arbeitsmediums gesehen benachbarte Leitschaufel vorgesehen. Dazu weist die jeweilige Leitschaufel an ihrem freien, der Turbinenwelle zugewandten Ende einen Einlaß für das Kühlmedium auf. Im Betriebsfall wird die jeweilige Leitschaufel somit vom Kühlmedium in der Art einer "gegenläufigen Durchströmung" von ihrem freien Ende in Richtung zu ihrem Schaufelfuß hin durchströmt.

Für einen besonders günstigen Einspareffekt hinsichtlich des benötigten Kühlmediums und somit für einen besonders hohen Beitrag zur Wirkungsgradsteigerung ist zweckmäßigerweise eine derartige geschlossene Kühlung für die in Strömungsrichtung des Arbeitsmediums gesehen erste Laufschaufelreihe vorgesehen. Dazu weisen in vorteilhafter Ausgestaltung diejenigen Leitschaufeln an ihrem freien Ende einen Einlaß für das Kühlmedium auf, die in Strömungsrichtung des Arbeitsmediums gesehen die dieser Laufschaufelreihe nachgeschaltete Leitschaufelreihe bilden.

Aufgrund der vorgesehenen Durchströmungsrichtung des Kühlmediums durch die jeweiligen Leitschaufeln strömt das Kühlmedium aus den jeweiligen Leitschaufeln in einen Bereich des Turbinengehäuses ab. Das Kühlmedium ist somit besonders einfach in kontrollierter Weise abführbar. Demzufolge ist die Gasturbine grundsätzlich sowohl für die Verwendung von Kühldampf als auch für die Verwendung von Kühlluft als Kühlmedium geeignet. Vorteilhafterweise ist dabei als Kühlmedium Kühlluft vorgesehen. Dies kann dabei austrittsseitig in einem Bereich der vorderen Verhakung der Leitschaufel geführt und von dort durch Bohrungen im Leitschaufelträger wieder der Verbrennung zugeführt sein.

Zur Bereitstellung einer geschlossenen Kühlung für die die in Strömungsrichtung des Arbeitsmediums gesehen erste Laufschaufelreihe bildenden Laufschaufeln weisen diese in vorteilhafter Weiterbildung jeweils einen integrierten Kühlmittelkanal auf, dessen Einlaß und Auslaß jeweils an der Turbinenwelle angeordnet ist. Dabei ist als Strömungsweg für das Kühlmedium innerhalb der jeweiligen Laufschaufel jeweils ein Mäander vorgesehen. Nach dem Abströmen aus der jeweiligen Laufschaufel setzt sich der Strömungsweg des Kühlmediums durch die jeweils nachgeschaltete Leitschaufel radial nach außen fort. Bei einer derartigen Ausgestaltung erfolgt sowohl für die Lauf- als auch für die Leitschaufel eine Versorgung mit Kühlmedium an ihrer jeweils der Turbinenwelle zugewandten Seite. Das Kühlmedium strömt somit in die jeweilige Lauf- oder Leitschaufel im vergleichsweise heißesten Bereich ein, so daß eine besonders günstige Kühlwirkung erzielt ist.

In weiterer vorteilhafter Ausgestaltung kommunizieren die Ausflüsse der Kühlmittelkanäle der jeweiligen Laufschaufeln dabei mit einer in die Turbinenwelle integrierten Vorlagekammer, die ihrerseits ausgangsseitig mit jeweils einem Kühlmitteleinlaß jeder der der in Strömungsrichtung des Arbeitsmediums gesehen nachfolgenden Leitschaufelreihe zugehörigen Leitschaufeln verbunden ist.

Um eine besonders zuverlässige Durchströmung des Kühlmediums sowohl durch die jeweiligen Laufschaufeln als auch durch die kühlmittelseitig jeweils nachgeschalteten Leitschaufeln zu gewährleisten, ist in weiterer vorteilhafter Ausgestaltung in den Strömungsweg des Kühlmediums vor dessen Eintritt in die Kühlmittelkanäle ein Verdichter geschaltet. Dieser ist zweckmäßigerweise für eine Druckerhöhung im Kühlmedium von etwa 0,5 bis 1 bar ausgelegt. Der Verdichter kann dabei als Axialverdichter oder auch als Radialverdichter ausgestaltet sein. Bei einer Ausgestaltung als Radialverdichter kann die Drukkerhöhung im Kühlmedium durch eine entsprechend gewählte radiale Höhe der Bohrungen in der rotierenden Turbinenwelle erreicht werden, wobei die Zentrifugalkraft der rotierenden Turbinenwelle zur Druckerhöhung genutzt wird.

Die mit der Erfindung erzielten Vorteile bestehen insbesondere darin, daß durch die an ihrem freien, der Turbinenwelle zugewandten Ende mit einem Einlaß für das Kühlmedium versehenen und somit radial von der Turbinenwelle aus hin zum Turbinengehäuse durchströmten Leitschaufeln in besonders enger Anlehnung an existierende, offene Kühlkonzepte eine geschlossene Kühlung von Laufschaufeln ermöglicht ist. Der Strömungsweg des Kühlmediums in dieser geschlossenen Kühlung ist dabei besonders kurz gehalten, so daß die auftretenden Druckverluste besonders gering gehalten sind. Somit ist auf besonders einfache Weise eine geschlossene Kühlung für die jeweiligen Laufschaufeln erreichbar, wobei zudem das endgültig aus den jeweiligen Leitschaufeln abströmende Kühlmedium im Bereich des Turbinengehäuses und somit ortsfest anfällt. Somit ist auf besonders einfache Weise eine Entsorgung des Kühlmediums ermöglicht.

Ein Ausführungsbeispiel der Erfindung wird anhand einer Zeichnung näher erläutert. Darin zeigen:
- Figur 1: einen Halbschnitt durch eine Gasturbine,
- Figur 2: einen Ausschnitt aus einem Längsschnitt der Gasturbine nach Figur 1 mit der Darstellung von Kühlkanälen, und
- Figur 3: einen Ausschnitt wie in Figur 2 mit einer alternativen Verschaltung der Kühlkanäle.

Gleiche Teile sind in allen Figuren mit denselben Bezugszeichen versehen.

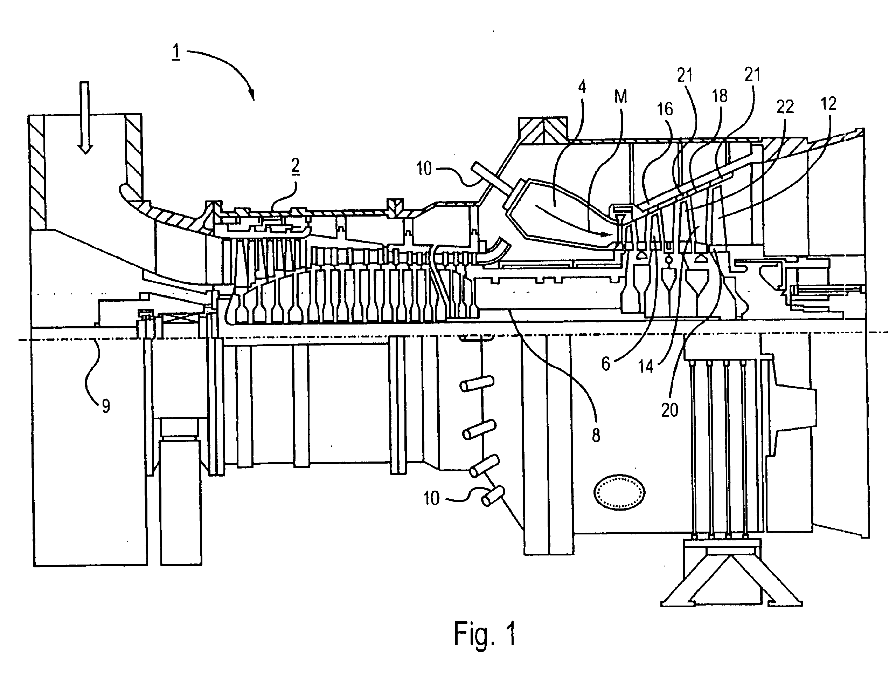

Die Gasturbine 1 gemäß Figur 1 weist einen Verdichter 2 für Verbrennungsluft, eine Brennkammer 4 sowie eine Turbine 6 zum Antrieb des Verdichters 2 und eines nicht dargestellten Generators oder einer Arbeitsmaschine auf. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse 9 drehbar gelagert ist.

Die Brennkammer 4 ist mit einer Anzahl von Brennern 10 zur Verbrennung eines flüssigen oder gasförmigen Brennstoffs bestückt. Sie ist weiterhin an ihrer Innenwand mit nicht näher dargestellten Hitzeschildelementen versehen.

Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfaßt die Turbine 6 eine Anzahl von feststehenden Leitschaufeln 14, die ebenfalls kranzförmig unter der Bildung von Leitschaufelreihen an einem Innengehäuse 16 der Turbine 6 befestigt sind. Die Laufschaufeln 12 dienen dabei zum Antrieb der Turbinenwelle 8 durch Impulsübertrag vom die Turbine 6 durchströmenden Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinanderfolgenden Laufschaufelreihen oder Laufschaufelkränzen. Ein aufeinanderfolgendes Paar aus einem Kranz von Leitschaufeln 14 oder einer Leitschaufelreihe und aus einem Kranz von Laufschaufeln 12 oder einer Laufschaufelreihe wird dabei auch als Turbinenstufe bezeichnet.

Jede Leitschaufel 14 weist eine auch als Schaufelfuß bezeichnete Plattform 18 auf, die zur Fixierung der jeweiligen Leitschaufel 14 am Innengehäuse 16 der Turbine 6 als Wandelement angeordnet ist. Die Plattform 18 ist dabei ein thermisch vergleichsweise stark belastetes Bauteil, das die äußere Begrenzung eines Heißgaskanals für das die Turbine 6 durchströmende Arbeitsmedium M bildet. Jede Laufschaufel 12 ist in analoger Weise über eine auch als Schaufelfuß bezeichnete Plattform 20 an der Turbinenwelle 8 befestigt.

Zwischen den beabstandet voneinander angeordneten Plattformen 18 der Leitschaufeln 14 zweier benachbarter Leitschaufelreihen ist jeweils ein Führungsring 21 am Innengehäuse 16 der Turbine 6 angeordnet. Die äußere Oberfläche jedes Führungsrings 19 ist dabei ebenfalls dem heißen, die Turbine 6 durchströmenden Arbeitsmedium M ausgesetzt und in radialer Richtung vom äußeren Ende 22 der ihm gegenüber liegenden Laufschaufel 12 durch einen Spalt beabstandet. Die zwischen benachbarten Leitschaufelreihen angeordneten Führungsringe 19 dienen dabei insbesondere als Abdeckelemente, die die Innenwand 16 oder andere Gehäuse-Einbauteile vor einer thermischen Überbeanspruchung durch das die Turbine 6 durchströmende heiße Arbeitsmedium M schützt.

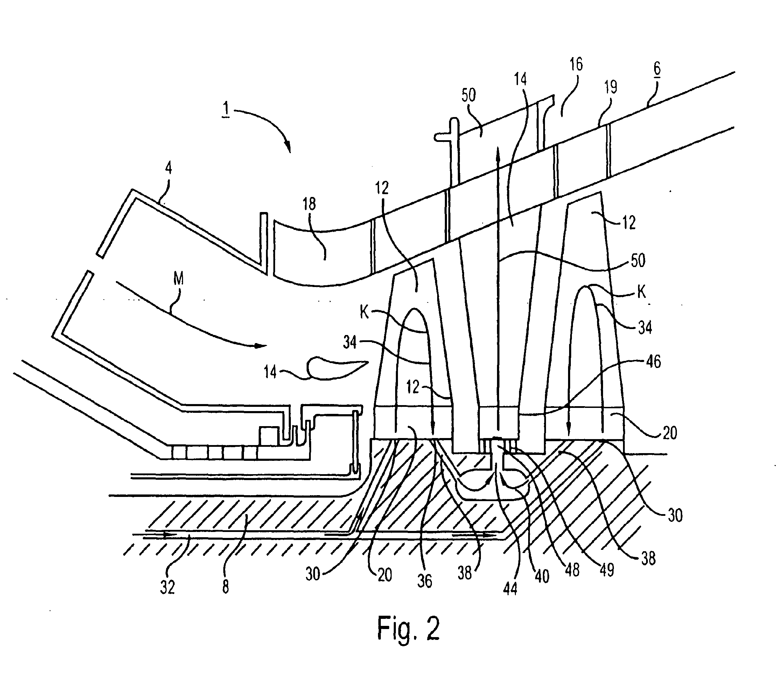

Zur Erzielung eines vergleichsweise hohen Wirkungsgrades ist die Gasturbine 1 für eine vergleichsweise hohe Austrittstemperatur des aus der Brennkammer 4 austretenden Arbeitsmediums M von etwa 1200 °C bis 1300 °C ausgelegt. Um dies zu ermöglichen, sind zumindest einige der Laufschaufeln 12 und der Leitschaufeln 14 durch Kühlluft als Kühlmedium kühlbar ausgelegt. Zur Verdeutlichung des Strömungsweges der Kühlluft ist der der Brennkammer 4 unmittelbar folgende Bereich der Gasturbine 1 in Figur 2 im Ausschnitt vergrößert dargestellt. Dabei ist erkennbar, daß das aus der Brennkammer 4 abströmende Arbeitsmedium M zunächst auf eine Anzahl von Leitschaufeln 14 trifft, die die sogenannte erste Leitschaufelreihe bilden und über ihre jeweilige Plattform 18 in die Brennkammer 4 eingehängt sind. In Strömungsrichtung des Arbeitsmediums M gesehen folgen sodann die die erste Laufschaufelreihe bildenden Laufschaufeln 12, die die zweite Laufschaufelreihe bildenden Leitschaufeln 14, sowie die die zweite Laufschaufelreihe bildenden Laufschaufeln 12.

Um einen besonders hohen Wirkungsgrad der Gasturbine 1 zu ermöglichen, sind zumindest die die erste Laufschaufelreihe und die zweite Laufschaufelreihe bildenden Laufschaufeln 12 für eine geschlossene Luftkühlung, d. h. für eine kontrollierte Abführung "verbrauchter" Kühlluft K, ausgelegt. Dazu weist jede der die erste und die zweite Laufschaufelreihe bildenden Laufschaufeln 12 in ihrer ihren Schaufelfuß bildenden Plattform 20 jeweils einen Einlaß 30 für Kühlluft K als Kühlmedium auf. Der Einlaß 30 ist dabei jeweils mit einem in der Turbinenwelle 8 geführten integriertem Kanalsystem 32 verbunden, über das der jeweilige Einlaß 30 mit Kühlluft K bespeisbar ist. Innerhalb der jeweiligen Laufschaufel 12 ist ein nicht näher dargestellter Kühlmittelkanal, insbesondere in Form eines Mäander, angeordnet, der mit dem Einlaß 30 in Verbindung steht. Zur Bildung eines durch den Pfeil 34 jeweils angedeuteten Strömungswegs für die Kühlluft K ist der Kühlmittelkanal dabei derart mäanderförmig geführt, daß sämtliche Raumbereiche der jeweiligen Laufschaufel 12 ausreichend kühlbar sind. Der jeweilige Kühlmittelkanal mündet dabei ausgangsseitig in einem ebenfalls im Bereich der Plattform 20 und der Turbinenwelle 8 angeordneten Auslaß 36.

Die Auslässe 36 der Laufschaufeln 12 kommunizieren über einen jeweils zugeordneten Abströmkanal 38 mit einer gemeinsamen, in die Turbinenwelle 8 integrierten Vorlagekammer 40, in die die aus den Laufschaufeln 12 abströmende Kühlluft K gelangt. Die Vorlagekammer 40 weist eine Anzahl von Kühlmittelauslässen 44 auf, von denen jeder jeweils einer Leitschaufel 14 zugeordnet ist. Dazu ist jeder Kühlmittelauslaß 44 räumlich dem Endstück 46 der jeweiligen Leitschaufel 14 gegenüberliegend angeordnet. Die entsprechende Leitschaufel 14 weist dabei endseitig oder an ihrem Endstück 46 eine dem jeweiligen Kühlmittelauslaß 44 zugewandten Einlaß 48 für Kühlluft K als Kühlmedium auf. Nach außen hin, also gegenüber dem Strömungsraum des Arbeitsmediums M innerhalb der Turbine 6, ist die aus dem Kühlmittelauslaß 44' und dem Einlaß 48 gebildete Strömungsverbindung mittels einer Lamellendichtung 49 abgedichtet.

Der Einlaß 48 ist mit einem in der jeweiligen Leitschaufel 14 geführten, nicht näher dargestellten Kühlmittelkanal verbunden, über den in die Leitschaufel 14 über den Einlaß 48 einströmende Kühlluft K die Leitschaufel 14 im wesentlichen radial von der Turbinenwelle 8 weg hin zur Innenwand 16 der Turbine 6 durchströmt. Dieser Teil des Strömungsweges ist durch den Pfeil 50 symbolisiert. Ausgangsseitig ist der Kühlmittelkanal dabei mit einer in die Innenwand 16 des Turbinengehäuses integrierten Abluftkammer 51 verbunden, von der aus "verbrauchtes" Kühlmedium einer weiteren Verwendung oder einer Entsorgung zuführbar ist.

Zusammengefaßt ergibt sich somit als Strömungsweg für die Kühlluft K: Die Kühlluft K wird über das Kanalsystem 32 zugeführt und gelangt von dort zum Einlaß 30 der jeweiligen Laufschaufel 12. Von dort aus durchströmt die Kühlluft K die jeweilige Laufschaufel 12 im wesentlichen mäanderförmig und gelangt dabei zum Auslaß 36 im Bereich der Turbinenwelle 8. Innerhalb der Turbinenwelle 8 strömt die Kühlluft K sodann in die Vorlagekammer 40, von wo sie zum Einlaß 48 der jeweiligen Leitschaufel 14 gelangt. Anschließend durchströmt die Kühlluft K die Leitschaufel 14 radial von innen nach außen. Nach Abströmen aus der Leitschaufel 14 gelangt die "verbrauchte" Kühlluft K in die Abluftkammer 51.

Aufgrund des sich dabei ergebenden vergleichsweise kurzen Strömungswegs sind die Druckverluste der Kühlluft K trotz der geschlossenen Kühlung vergleichsweise gering. Um eine zuverlässige Durchströmung der Kühlluft K sicher aufrecht zu erhalten, ist vor dem Einströmen der Kühlluft K in den Einlaß 30 der jeweiligen Laufschaufel 12 eine Druckerhöhung von etwa 0,5 bis 1 bar vorgesehen. Dazu ist das Kanalsystem 32 mit einem Verdichter versehen. Der Verdichter kann dabei als Axialverdichter ausgebildet sein. Im Ausführungsbeispiel ist als Verdichter jedoch ein Radialverdichter vorgesehen, wobei die Druckerhöhung durch die radiale Anordnung des Einlasses 30 im Hinblick auf die Turbinenwelle 8 sichergestellt wird. Insbesondere ist dazu jeder Einlaß 30 in radialer Richtung gesehen weiter von der Mittelachse 9 der Turbinenwelle 8 entfernt als die Vorlagekammer 40. Bei rotierender Turbinenwelle 8 führt die resultierende Zentrifugalkraft somit zu einer zur Überwindung der Druckverluste innerhalb der jeweiligen Laufschaufel 12 ausreichenden Druckerhöhung der Kühlluft K am jeweiligen Einlaß 30.

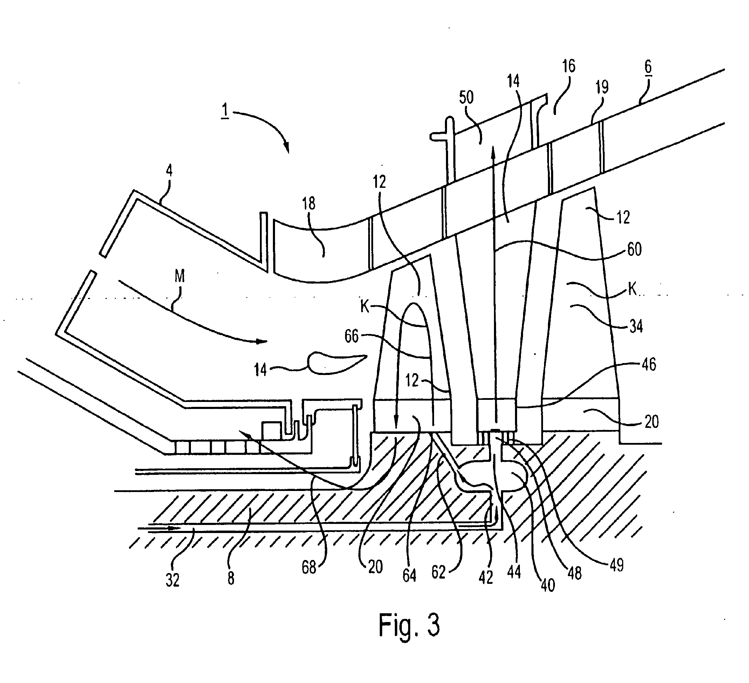

Eine alternative Strömungsführung für die Kühlluft K unter Beibehaltung der sonstigen Komponenten ist in Figur 3 gezeigt. Bei dieser Auslegung, die beispielsweise infolge von Abweichungen in den Rahmenbedingungen wie der Menge der insgesamt bereitgestellten Kühlluft K günstig sein kann, erfolgt die Bespeisung der Vorlagekammer 40 mit Kühlluft K unmittelbar über das Kanalsystem 32. Von dort erfolgt in der Art einer parallelen Ableitung von Teilströmen der Kühlluft K einerseits eine Beaufschlagung der Leitschaufel 14 mit Kühlluft K über den Einlaß 48, wie dies durch den Pfeil 60 symbolisiert ist. In diesem Fall gelangt die Kühlluft K somit "unverbraucht" und als Frischluft in die Leitschaufeln 14.

Parallel dazu erfolgt von der Vorlagekammer 40 aus in diesem Falle auch eine Bespeisung der Laufschaufel 12 über einen Teilkanal 62, der mit einem Kühlmitteleinlaß 64 der Laufschaufel 12 verbunden ist. Von dort durchströmt der Teilstrom der Kühlluft K die Laufschaufel 12, wie dies durch den Pfeil 66 symbolisiert ist. Anschließend erfolgt, wie durch den Pfeil 68 symbolisiert, eine geeignete Abführung der nunmehr "verbrauchten" Kühlluft K dieses Teilstromzweiges.

## Patentansprüche

1. Gasturbine (1) mit einer Anzahl von jeweils zu Laufschaufelreihen zusammengefaßten, an einer Turbinenwelle (8) angeordneten Laufschaufeln (12) und mit einer Anzahl von jeweils zu Leitschaufelreihen zusammengefaßten, mit einem Turbinengehäuse verbundenen Leitschaufeln (14), von denen zumindest einige an ihrem freien, der Turbinenwelle (8) zugewandten Ende einen Einlaß für ein Kühlmedium aufweisen,
wobei die die in Strömungsrichtung des Arbeitsmediums (M) gesehen erste Laufschaufelreihe bildenden Laufschaufeln (12) jeweils einen integrierten Kühlmittelkanal aufweisen, dessen Einlaß jeweils an der Turbinenwelle (8) angeordnet ist,
**dadurch gekennzeichnet, dass**
der in den Laufschaufeln jeweils integrierte Kühlmittelkanal einen an der Turbinenwelle (8) angeordneten Auslaß aufweisen, wobei die Auslässe der Kühlmittelkanäle der jeweiligen Laufschaufeln (12) mit einer in die Turbinenwelle (8) integrierten Vorlagekammer (40) kommunizieren, die ihrerseits ausgangsseitig mit jeweils einem Einlaß (30), (48) für Kühlmedium jeder der der in Strömungsrichtung des Arbeitsmediums (M) gesehen nachfolgenden Leitschaufelreihe zugehörigen Leitschaufel (14) verbunden ist.

2. Gasturbine (1) nach Anspruch 1, bei der diejenigen Leitschaufeln (14) an ihrem freien Ende einen Einlaß für das Kühlmedium aufweisen, die die der in Strömungsrichtung des Arbeitsmediums (M) gesehen ersten Laufschaufelreihe nachgeschaltete Leitschaufelreihe bilden.

3. Gasturbine (1) nach Anspruch 1 oder 2, bei der als Kühlmedium Luft vorgesehen ist.

4. Gasturbine (1) nach Anspruch 1, 2 oder 3, bei der in den Strömungsweg des Kühlmediums vor dessen Eintritt in die Kühlmittelkanäle ein Verdichter geschaltet ist.

## Claims

1. Gas turbine (1) having a number of moving blades 12 combined to form respective moving blade rows and arranged on a turbine shaft (8), and having a number of guide blades (14) which are combined to form respective guide blade rows and are connected to a turbine casing, and of which at least some have an inlet for cooling medium at their free end facing the turbine shaft (8),
the moving blades (12) which form the first moving blade row as viewed in the direction of flow of the working medium (M) having a respective integrated coolant passage, the inlet of which is in each case arranged at the turbine shaft (8),
**characterized in that** the coolant passage integrated in the respective moving blades has an outlet arranged at the turbine shaft (8),
the outlets of the coolant passages of the respective moving blades (12) communicating with a receiving chamber (40) which is integrated in the turbine shaft (8) and which in turn is connected on the outlet side to a respective inlet (48) for cooling medium of each of the guide blades (14) belonging to the downstream guide blade row as viewed in the direction of flow of the working medium (M).

2. Gas turbine (1) according to Claim 1, in which those guide blades (14) which form the guide blade row arranged downstream of the first moving blade row as viewed in the direction of flow of the working medium (M) have an inlet for the cooling medium at their free end.

3. Gas turbine (1) according to Claim 1 or 2, in which the cooling medium provided is air.

4. Gas turbine (1) according to Claim 1, 2 or 3, in which a compressor is connected in the flow path of the cooling medium upstream of its entry into the coolant passages.

## Revendications

1. Turbine (1) à gaz, comportant un certain nombre d' aubes (12) de rotor disposées sur un arbre (8) de turbine en étant respectivement regroupées en rangées de aubes de rotor, et comportant un certain nombre d' aubes (14) de stator reliées à un carter de turbine en étant respectivement regroupées en rangées d' aubes de stator, parmi lesquelles au moins certaines présentent, à leur extrémité libre tournée vers l'arbre (8) de turbine, une admission pour un agent de refroidissement,
sachant que les aubes (12) de rotor formant, telles que vues dans le sens d'écoulement du fluide (M) de travail, la première rangée d' aubes de rotor comportent respectivement un conduit intégré d'agent de refroidissement dont l'admission est respectivement disposée sur l'arbre (8) de turbine,
**caractérisée en ce que** le conduit d'agent de refroidissement respectivement intégré dans les aubes de rotor comporte une évacuation disposée sur l'arbre (8) de turbine, les évacuations des conduits d'agent de refroidissement des aubes (12) de rotor respectives communiquant avec une préchambre (40) intégrée dans l'arbre (8) de turbine, qui communique elle-même du côté de sortie avec une admission (30, 48) respective d'agent de refroidissement de chacune des aubes (14) de stator appartenant à la rangée suivante, telle que vue dans le sens d'écoulement du fluide (M) de travail, d' aubes de stator.

2. Turbine (1) à gaz suivant la revendication 1, dans laquelle les aubes (14) de stator qui constituent la rangée d' aubes de stator montée à la suite de la première rangée, telle que vue dans le sens d'écoulement du fluide (M) de travail, d' aubes de stator comportent à leur extrémité libre une admission pour l'agent de refroidissement.

3. Turbine (1) à gaz suivant la revendication 1 ou 2, dans laquelle de l'air est prévu comme agent de refroidissement.

4. Turbine (1) à gaz suivant la revendication 1, 2 ou 3, dans laquelle un compresseur est monté dans le chemin d'écoulement de l'agent de refroidissement avant l'entrée de ce dernier dans les conduits d'agent de refroidissement.
